# EUROPÄISCHE PATENTANMELDUNG

(11) **EP 3 213 875 A1**
(43) Veröffentlichungstag der Anmeldung: **06.09.2017**
(21) Anmeldenummer: 16158695.3
(22) Anmeldetag: 04.03.2016
(51) Int. Cl.: B25D 17/00, B25F 5/00, H01H 25/00, G01D 5/165, G01D 18/00

(54) **ELEKTRISCHE HANDWERKZEUGMASCHINE UND KALIBRIERUNGSVERFAHREN**

(71) Anmelder: HILTI Aktiengesellschaft, 9494 Schaan (LI)
(72) Erfinder: Nagl, Tobias, 86899 Landsberg am Lech (DE)
(74) Vertreter: Hilti Aktiengesellschaft Corporate Intellectual Property

(57) **Zusammenfassung**

Elektrische Handwerkzeugmaschine (100) mit einer Motorsteuereinheit (10) zum Ansteuern eines von der Handwerkzeugmaschine (100) umfassten Elektromotors (90) und mit einer Potentiometer-Schalter-Einheit (20), die mit der Motorsteuereinheit (10) zwecks DrehzahlSollwert-Vorgabe verbunden ist, wobei die Potentiometer-Schalter-Einheit (20) einen Drücker (25) aufweist, der derart eingerichtet ist, dass bei einer Wegbetätigung zunächst ein mechanischer Kontakt im Schalter geschlossen wird und danach, bei weiterer Wegbetätigung, ein mechanischer Schleifer auf einer Potentiometer-Schleifbahn wirksam wird, wobei die Motorsteuereinheit (10) ausgebildet ist den Elektromotor unter Verwendung einer kalibrierten, vorzugsweise linearisierten Potentiometerkennlinie (KL) anzusteuern, wobei die Potentiometerkennlinie (KL) derart kalibriert und vorzugsweise extrapoliert ist, dass ein Schnittpunkt (SP1) zwischen der Potentiometerkennlinie (KL) und einer Schalterkennline (SL) des Schalters im ersten Quadranten (Q1) eines Koordinatensystems liegt, das durch den elektrischen Widerstand des Potentiometers als Ordinate und den tatsächlichen Betätigungsweg (BW) des Drückers (25) als Abszisse aufgespannt ist.

## Beschreibung

Die vorliegende Erfindung betrifft eine elektrische Handwerkzeugmaschine mit einer Motorsteuereinheit zum Ansteuern eines von der Handwerkzeugmaschine umfassten Elektromotors und mit einer Potentiometer-Schalter-Einheit, die mit der Motorsteuereinheit zwecks Drehzahl-Sollwert-Vorgabe verbunden ist. Die Potentiometer-Schalter-Einheit weist einen Drücker auf, der derart eingerichtet ist, dass bei einer Wegbetätigung zunächst ein mechanischer Kontakt im Schalter geschlossen wird und danach, bei weiterer Wegbetätigung, ein mechanischer Schleifer auf einer Potentiometer-Schleifbahn wirksam wird.

Die vorliegende Erfindung betrifft ebenfalls ein Verfahren zum Kalibrieren einer Potentiometer-Schalter-Einheit einer elektrischen Handwerkzeugmaschine.

Elektrische Handwerkzeugmaschinen der eingangs genannten Art, beispielsweise in Form eines Bohrhammers oder eines Akkuschraubers, sind grundsätzlich aus dem Stand der Technik bekannt.

Es ist Aufgabe der vorliegenden Erfindung, eine elektrische Handwerkzeugmaschine zu schaffen, die eine hohe Betriebssicherheit aufweist. Es ist weiterhin Aufgabe der vorliegenden Erfindung, ein Verfahren zum Kalibrieren einer Potentiometer-Schalter-Einheit bereitzustellen, welches eine solche betriebssichere Handwerkzeugmaschine ermöglicht.

Bezüglich der elektrischen Handwerkzeugmaschine wird die Aufgabe dadurch gelöst, dass die Motorsteuereinheit ausgebildet ist, den Elektromotor unter Verwendung einer kalibrierten, vorzugsweise linearisierten Potentiometerkennlinie anzusteuern. Die Potentiometerkennlinie ist derart kalibriert und vorzugsweise extrapoliert, dass ein Schnittpunkt zwischen der Potentiometerkennlinie und einer Schalterkennlinie des Schalters im ersten Quadranten eines Koordinatensystems liegt, das durch den elektrischen Widerstand des Potentiometers als Ordinate und den tatsächlichen Betätigungsweg des Drückers als Abszisse aufgespannt ist.

Die Erfindung schließt die Erkenntnis ein, dass zur Drehzahl-Sollwert-Vorgabe bei elektrischen Handwerkzeugmaschinen Potentiometer zum Einsatz kommen, deren mechanische Toleranzen häufig zu Problemen führen. Als Problem wurde beispielsweise erkannt, dass erst bei weiterer Wegbetätigung des Drückers der mechanische Schleifer auf der Potentiometer-Schleifbahn wirksam wird und es demzufolge für die Motorsteuereinheit der Handwerkzeugmaschine nicht erkennbar ist, ob der Schalter (Hauptkontakt) bereits geschlossen oder noch offen ist. Dadurch ergeben sich Einschränkungen im Funktionsumfang der Motorsteuereinheit.

Die Erfindung schließt weiterhin die Erkenntnis ein, dass Lösungen des Standes der Technik, bei denen beispielsweise softwareseitig Offsetwerte hinterlegt werden, welche die maximalen mechanischen Toleranzen beinhalten, dieses Problem nur unzureichend lösen. Es wird nämlich der effektiv nutzbare Betätigungsweg der Potentiometer-Schleifbahn - und somit letztendlich auch der effektiv nutzbare tatsächliche Betätigungsweg des Drückers - stark reduziert.

Zusätzlich wurde erkannt, dass Toleranzen des Potentiometers dazu führen können, dass der Schalter (Hauptkontakt) schon öffnet, obwohl eine Drehzahl-Sollwert-Vorgabe seitens der Motorsteuereinheit noch nicht den Wert Null vorgibt und somit noch ein Motorstrom fließt. Dies hat einen massiven Einfluss auf die Lebensdauer des mechanischen Hauptkontakts des Schalters, da dieser in dem beschriebenen Fall unter Last geöffnet wird, wobei Funken entstehen können. Um diesem Problem abzuhelfen, müsste der Hauptkontakt des Schalters massiv und damit kostenintensiv ausgeführt werden. Ebenfalls wurde erkannt, dass eine Verkleinerung der Toleranzen keine Abhilfe bringen würde, da eine solche Verkleinerung der Toleranzen durch klimatische Bedingungen und Staub zum Verklemmen des Schalters führen könnte.

Darüber hinaus schließt die Erfindung die Erkenntnis ein, dass bei vielen Kohleschichtpotentiometern, als solche werden die Potentiometer typischerweise bereitgestellt, kurz vor Erreichen eines Endes der Schleifbahn eine Überhöhung der Kennlinie messbar ist. Mit anderen Worten weist die Potentiometerkennlinie im Bereich des Endes der Potentiometer-Schleifbahn ein nichtlineares Verhalten auf, wobei die Potentiometerkennlinie eine erhöhte Steigung aufweist. Eine solche Kennlinienüberhöhung, die für den Benutzer der Handwerkzeugmaschine durch Drehzahlschwankungen wahrnehmbar ist, unterliegt zudem starken Bauteilschwankungen. Die besagten Drehzahlschwankungen können nicht nur einen Komfortnachteil bedeuten, sondern, beispielsweise im Falle eines Bohrschraubers, auch zu einem sicherheitsrelevanten Abrutschen führen.

Die erfindungsgemäß ausgebildete Handwerkzeugmaschine vermeidet diese Nachteile.

Dadurch, dass der Schnittpunkt zwischen der Potentiometerkennlinie und der Schalterkennlinie des Schalters im ersten Quadranten des Koordinatensystems liegt, kann eine von der Motorsteuereinheit und beispielsweise auf einem Mikrocontroller betriebene Software anhand des Potentiometerwertes erkennen, ob der Schalter der Potentiometer-Schalter-Einheit geschlossen ist.

In einer besonders bevorzugten Ausgestaltung ist die Potentiometerkennlinie derart kalibriert und vorzugsweise extrapoliert, dass die Potentiometerkennlinie eine Endlagenkennlinie des Drückers im ersten Quadranten des Koordinatensystems schneidet.

Vorzugsweise verläuft die berechnete Potentiometerkennlinie unterhalb einer tatsächlichen Kennlinienüberhöhung des Potentiometers im Bereich der Endlage des Drückers. Dies hat den Vorteil, dass bei voll durchgedrücktem Drücker der Potentiometerwert dadurch selbst bei Bauteilstreuungen nicht im Bereich der Kennlinienüberhöhung liegt, da diese erst nach dem mechanischen Endanschlag, das heißt dem maximalen tatsächlichen Betätigungsweg des Drückers, auftreten würde. Die berechnete Potentiometerkennlinie kann im letzten Drittel des tatsächlichen Betätigungswegs unterhalb einer tatsächlichen Kennlinienüberhöhung liegen.

Es hat sich als vorteilhaft herausgestellt, wenn die Schalterkennlinie und die Endlagenkennlinie parallel zur Ordinate verlaufen.

Die Potentiometerkennlinie kann über ihren Schnittpunkt mit der Schalterkennlinie hinaus verlängert sein. Die Potentiometerkennlinie kann über ihren Schnittpunkt mit der Endlagenkennlinie hinaus verlängert sein.

Es hat sich als vorteilhaft herausgestellt, wenn die berechnete Potentiometerkennlinie linear ist. Es hat sich als vorteilhaft herausgestellt, wenn eine lineare Potentiometerkennlinie eine Steigung zwischen 630 und 740 Ohm pro Millimeter Betätigungsweg aufweist.

Alternativ kann die Potentiometerkennlinie nichtlinear sein und beispielsweise durch einen D-Spline approximiert sein.

Es hat sich als vorteilhaft herausgestellt, wenn die Potentiometerkennlinie auf Basis von zumindest zwei Wertepaaren kalibriert ist. Die Potentiometerkennlinie kann auf Basis von vorzugsweise drei Wertepaaren kalibriert sein. Vorzugsweise ist ein erstes Wertepaar bestimmt durch Messen eines elektrischen Widerstands des Potentiometers zusammen mit der zugehörigen ersten Position des Drückers, sobald der mechanische Kontakt im Schalter geschlossen wird.

Ein zweites Wertepaar kann bestimmt sein durch Messen eines zweiten elektrischen Widerstands des Potentiometers zusammen mit der zugehörigen zweiten Position des Drückers, sobald die mechanische Endlage des Drückers erreicht wird.

Ein drittes Wertepaar kann bestimmt sein durch Messen eines dritten elektrischen Widerstands des Potentiometers zusammen mit der zugehörigen dritten Position des Drückers, sobald der mechanische Kontakt im Schalter geöffnet wird.

Das erste Wertepaar, das angibt, sobald der mechanische Kontakt im Schalter geschlossen wird, kann von dem dritten Paar, das angibt, wenn der mechanische Kontakt im Schalter geöffnet wird, verschieden sein. Dies beispielsweise aufgrund mechanischer Toleranzen. In einem Kennfeld kann also beispielsweise eine Schalterkennlinie eines schließenden Schalters und eine Schalterkennlinie eines öffnenden Schalters hinterlegt sein. Dies ist allerdings nicht notwendigerweise der Fall. Beispielsweise kann in einem Kennfeld auch lediglich eine Schalterkennlinie vorgesehen sein.

Vorzugsweise sind die Wertepaare in der Motorsteuereinheit abgespeichert.

Besonders bevorzugt ist die Motorsteuereinheit ausgebildet, beispielsweise mittels eines von der Motorsteuereinheit umfassten Mikrocontrollers, aus den Wertepaaren die Potentiometerkennlinie zu ermitteln beziehungsweise diese zu kalibrieren.

Alternativ oder zusätzlich kann die kalibrierte, vorzugsweise linearisierte Potentiometerkennlinie außerhalb der Motorsteuereinheit, beispielsweise während der Produktion der Handwerkzeugmaschine, bereitgestellt und lediglich in der Motorsteuereinheit abgelegt sein.

Eine Kalibrierung der Potentiometerkennlinie kann beispielsweise, ausgehend von physikalischen Messreihen, mittels der Methode der kleinsten Quadrate ermittelt werden. Diese Methode kann zusätzlich vorsehen, dass die Potentiometerkennlinie in Richtung der absteigenden Ordinate verschoben und/oder verkippt wird, derart, dass die berechnete Potentiometerkennlinie unterhalb einer tatsächlich gemessenen Kennlinienüberhöhung des Potentiometers im Bereich der Endlage des Drückers verläuft.

Bezüglich des Verfahrens wird die Aufgabe gelöst durch ein Verfahren zum Kalibrieren einer Potentiometer-Schalter-Einheit einer elektrischen Handwerkzeugmaschine, wobei die Handwerkzeugmaschine eine Motorsteuereinheit zum Ansteuern eines von der Handwerkzeugmaschine umfassten Elektromotors und eine Potentiometer-Schalter-Einheit aufweist. Die Potentiometer-Schalter-Einheit ist mit der Motorsteuereinheit zwecks Drehzahl-Sollwert-Vorgabe und weist einen Drücker auf, der derart eingerichtet ist, dass bei einer Wegbetätigung über einen Betätigungsweg zunächst ein mechanischer Kontakt im Schalter geschlossen wird und danach, bei weiterer Wegbetätigung, ein mechanischer Schleifer auf einer Potentiometer-Schleifbahn wirksam wird, wobei das Verfahren die Schritte aufweist:
- graduelles Weg-Betätigen des Drückers, vorzugsweise mittels eines Präzisionslinearmotors, ausgehend von einer Ruhelage des Drückers;
- Messen eines ersten elektrischen Widerstands des Potentiometers zusammen mit der zugehörigen ersten Position des Drückers als erstes Wertepaar, sobald der mechanische Kontakt im Schalter geschlossen wird;
- weiteres Weg-Betätigen des Drückers bis zu dessen mechanischer Endlage; und
- Messen eines zweiten elektrischen Widerstands des Potentiometers zusammen mit der zugehörigen zweiten Position des Drückers als zweites Wertepaar, sobald die mechanische Endlage des Drückers erreicht wird.

Durch das erfindungsgemäße Verfahren kann die mit Bezug auf die Handwerkzeugmaschine beschriebene kalibrierte, vorzugsweise linearisierte Potentiometerkennlinie erzeugt werden beziehungsweise die für deren Erzeugung erforderlichen Messwerte.

Es hat sich als vorteilhaft herausgestellt, wenn das Verfahren die Schritte aufweist:
- graduelles Zurückführen des Drückers, vorzugsweise mittels des Präzisionslinearmotors, in Richtung der Ruhelage des Drückers;
- Messen eines dritten elektrischen Widerstands des Potentiometers zusammen mit der zugehörigen dritten Position des Drückers als drittes Wertepaar, sobald der mechanische Kontakt im Schalter geöffnet wird.

In einer weiteren bevorzugten Ausgestaltung weist das Verfahren den Schritt auf:
- Abspeichern der Wertepaare und/oder einer mittels der Wertepaare kalibrierten und vorzugsweise linearisierten Potentiometerkennlinie in der Motorsteuereinheit.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
Fig. 1 ein bevorzugtes Ausführungsbeispiel einer elektrischen Handwerkzeugmaschine;
Fig. 2 ein Kennfeld mit Potentiometerkennlinie des Standes der Technik;
Fig. 3 ein Kennfeld einer erfindungsgemäßen elektrischen Handwerkzeugmaschine;
Fig.4 eine schematische Darstellung eines bevorzugten Ausführungsbeispiels eines Kalibrierungsverfahrens.

### Ausführungsbeispiele:

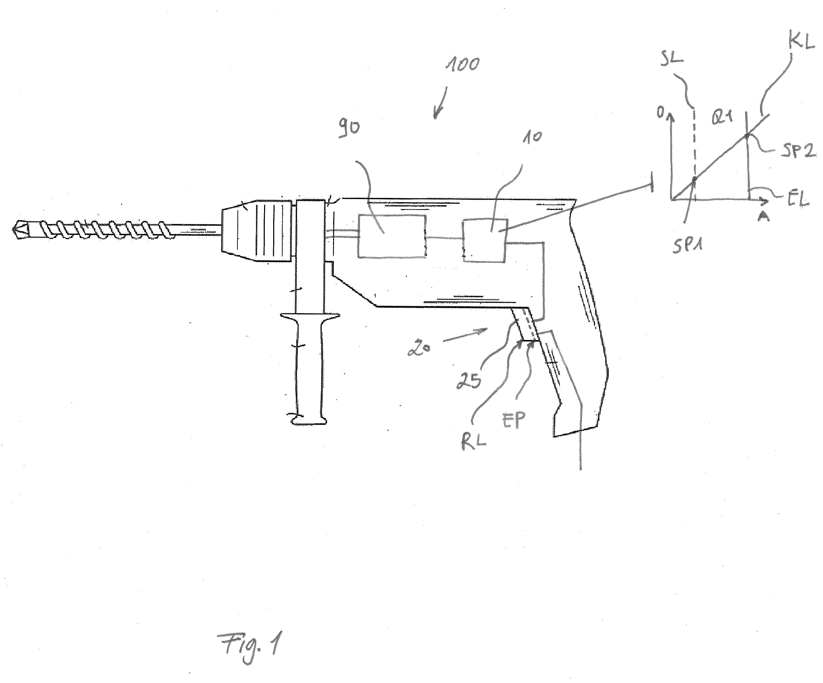

Ein bevorzugtes Ausführungsbeispiel einer elektrischen Handwerkzeugmaschine 100 ist in Fig. 1 dargestellt. Die Handwerkzeugmaschine 100 weist eine Motorsteuereinheit 10 zum Ansteuern eines von der Handwerkzeugmaschine 100 umfassten Elektromotors 90 auf. Die elektrische Handwerkzeugmaschine 100 weist ebenfalls eine Potentiometer-Schalter-Einheit 20 auf, die mit der Motorsteuereinheit 10 zwecks Drehzahl-Sollwert-Vorgabe verbunden ist.

Die Potentiometer-Schalter-Einheit 20 weist einen Drücker 25 auf, der derart eingerichtet ist, dass bei einer Wegbetätigung zunächst ein mechanischer Kontakt im Schalter geschlossen wird und danach, bei weiterer Wegbetätigung, ein mechanischer Schleifer auf einer Potentiometer-Schleifbahn wirksam wird. Die Potentiometer-Schalter-Einheit 20 weist sowohl einen Schalter als auch ein Potentiometer auf, die in Fig. 1 nicht gesondert bezeichnet sind.

Der Drücker 25 ist zwischen einer Ruhelage RL und einer mechanischen Endlage EP (in Fig. 1 gestrichelt dargestellt) betätigbar. Die Ruhelage RL wird eingenommen, wenn der Drücker 25 ohne jedwede Betätigung verbleibt. Die Endlage EP wiederum definiert den maximalen tatsächlichen Betätigungsweg des Drückers 25.

Auf der oberen rechten Seite in Fig. 1 ist ein Kennfeld dargestellt, das erfindungsgemäß in der Motorsteuereinheit 10 der elektrischen Handwerkzeugmaschine 100 hinterlegt ist. Demgemäß ist die Motorsteuereinheit 10 ausgebildet, den Elektromotor 90 unter Verwendung einer kalibrierten und vorliegend linearisierten Potentiometerkennlinie KL anzusteuern.

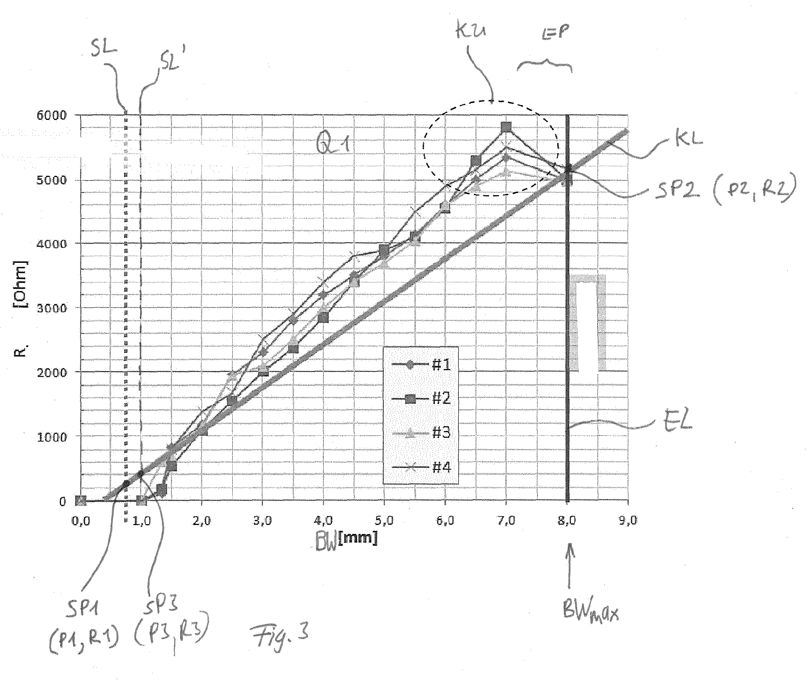

Die Potentiometerkennlinie KL ist derart kalibriert und extrapoliert, dass ein Schnittpunkt SP1 zwischen der Potentiometerkennlinie KL und einer Schalterkennlinie SL des Schalters im ersten Quadranten Q1 eines Koordinatensystems liegt, das durch den elektrischen Widerstand R des Potentiometers als Ordinate O und den tatsächlichen Betätigungsweg des Drückers 25 als Abszisse A aufgespannt ist. Dieses Kennfeld wird mit Bezug auf Fig. 3 später ausführlicher erläutert.

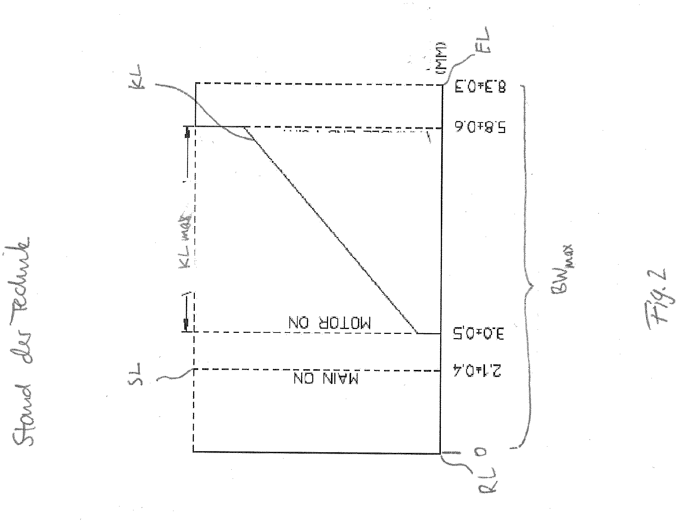

Fig. 2 zeigt ein Kennfeld des Standes der Technik, das im Folgenden kurz erläutert werden soll.

Die Abszisse des in Fig. 2 gezeigten Kennfeldes bildet den maximalen tatsächlichen Betätigungsweg BWₘₐₓ eines Drückers 25 ab. Ausgehend von einer Ruhelage RL, die einen Betätigungsweg BW des Drückers 25 von 0 mm bedeutet, erstreckt sich die Abszisse bis zum maximal tatsächlichen Betätigungsweg, der eine Endlage EP definiert.

Bei einer Wegbetätigung des Drückers 25 schließt zunächst ein mechanischer Hauptkontakt im Schalter. Dies ist durch eine Schalterkennlinie SL dargestellt, die die Abszisse bei 2,1 mm schneidet.

Bei weiterer Wegbetätigung wird ein mechanischer Schleifer auf einer Potentiometerbahn wirksam, in Fig. 2 bei 3 mm. Nachteiligerweise ist für eine Steuerelektronik einer Handwerkzeugmaschine des Standes der Technik nicht erkennbar, ob der Hauptkontakt des Schalters bereits geschlossen oder noch offen ist.

Die Potentiometerkennlinie KL verläuft im weiteren Verlauf linear ansteigend bis zu einem Betätigungsweg von 5,8 mm, der einen maximal sinnvoll nutzbaren Kennlinienbereich KLₘₐₓ begrenzt. Ausgehend von dieser Position ist die Potentiometerkennlinie KL abgeschnitten. Dementsprechend bleibt der weitere Betätigungsweg BW zwischen 5,8 und 8,3 mm (der Endlage EP des Drückers) ungenutzt. Somit ergibt sich gemäß Fig. 2 im Stand der Technik lediglich ein effektiv nutzbarer Betätigungsweg des Drückers 25 beziehungsweise des Potentiometers von KLₘₐₓ zwischen 3 mm und 5,8 mm.

In Abgrenzung zu dem mit Bezug auf Fig. 2 beschriebenen Kennlinienfeld des Standes der Technik wird nun eine Potentiometerkennlinie KL, wie sie in einer erfindungsgemäßen Motorsteuereinheit vorgesehen ist, mit Bezug auf Fig. 3 genauer beschrieben.

Dazu ist in Fig. 3 ein Diagramm aufgezeichnet, dessen Abszisse den tatsächlichen Bewegungsweg BW des Drückers 25 (vgl. Fig. 1) abbildet. Auf der Ordinate ist der elektrische Widerstand des Potentiometers, das Teil der Potentiometer-Schalter-Einheit 20 ist, aufgetragen. Das Diagramm spannt einen ersten Quadranten Q1 auf.

Vorliegend sind vier Messreihen dargestellt, nämlich #1, #2, #3 und #4, die reale Messungen des elektrischen Widerstands R in Ohm des Potentiometers über dem Betätigungsweg BW in Millimetern darstellen.

Auf der linken Seite und parallel zur Ordinate verlaufend ist eine Schalterkennlinie SL gezeigt, die die Position angibt, bei der der Schalter ein- beziehungsweise ausschaltet. Dies ist in Fig. 3 bei etwa 0,8 mm der Fall. Eine weitere Schalterkennlinie SL' deutet die Betätigungsposition an, bei der der mechanische Kontakt im Schalter geöffnet wird.

In Fig. 3 ist die weitere Schalterkennlinie SL' lediglich zu Informationszwecken dargestellt und nicht in die Kalibrierung der Potentiometerkennlinie KL eingeflossen. Vorzugsweise wird diese allerdings Berücksichtigung finden, wenn aufgrund von mechanischen Toleranzen der Einschalt- und Ausschaltpunkt des Schalters bezüglich des Betätigungswegs BW auseinanderfällt.

Wie der Fig. 3 entnommen werden kann, ist die Potentiometerkennlinie KL derart kalibriert und linearisiert, dass ein Schnittpunkt SP1 zwischen der Potentiometerkennlinie KL und der Schalterkennlinie SL im ersten Quadranten Q1 liegt. Gleichsam ist die Potentiometerkennlinie KL derart kalibriert und extrapoliert, dass die Potentiometerkennlinie KL auch die Endlagenkennlinie EL des Drückers 25 im ersten Quadranten Q1 schneidet. Dieser Schnitt erfolgt in einem zweiten Schnittpunkt SP2.

Gut erkennbar ist die Potentiometerkennlinie KL über die Schnittpunkte SP1 und SP2 mit der Schalterkennlinie SL beziehungsweise Endlagenkennlinie EL hinaus verlängert. Dies ist bei dem Kennfeld des Standes der Technik der Fig. 2 nicht der Fall.

Im vorliegend dargestellten Ausführungsbeispiel weist die lineare Potentiometerkennlinie KL eine Steigung von etwa 680 Ohm pro Millimeter Betätigungsweg BW auf.

Wie ebenfalls der Fig. 3 entnommen werden kann, verläuft die Potentiometerkennlinie KL unterhalb einer tatsächlich gemessenen Kennlinienüberhöhung KU des Potentiometers im Bereich der Endlage EP. Wie der Fig. 3 entnommen werden kann, tritt die Kennlinienüberhöhung KU etwa zwischen 6,5 und 7,5 Millimetern auf.

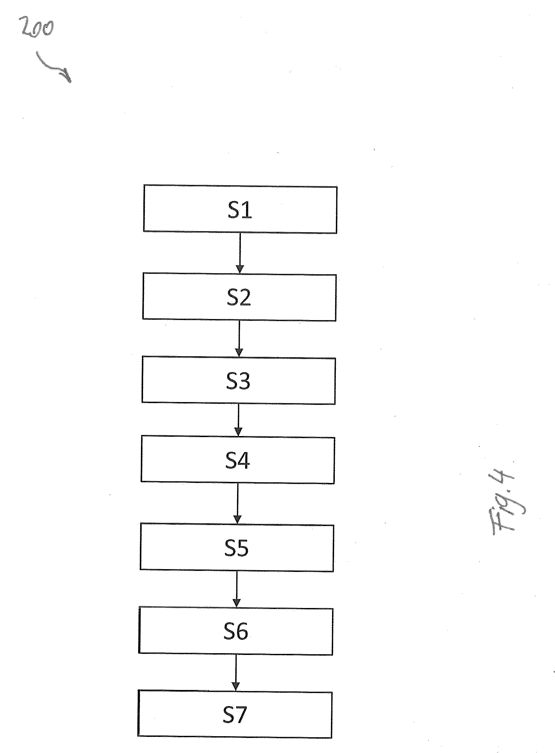

Ein Ermitteln der Wertepaare P1, R1; P2, R2; P3, R3 erfolgt nun im Rahmen der Beschreibung eines bevorzugten Ausführungsbeispiels eines erfindungsgemäßen Kalibrierungsverfahrens, welches in Fig. 4 dargestellt ist. Dabei wird teilweise auf die Fig. 1 und die Fig. 2 Bezug genommen.

Das erfindungsgemäße Verfahren 200 zum Kalibrieren einer Potentiometer-Schalter-Einheit einer elektrischen Handwerkzeugmaschine weist in einem bevorzugten Ausführungsbeispiel sieben Verfahrensschritte S1, S2, S3, S4, S5, S6 und S7 auf, die nacheinander durchgeführt werden.

In einem ersten Schritt S1 erfolgt zunächst ein graduelles Weg-Betätigen des Drückers 25 (vgl. Fig. 1) mittels eines hier nicht dargestellten Präzisionslinearmotors. Dabei erfolgt das Weg-Betätigen ausgehend von der Ruhelage RL des Drückers 25 (vgl. Fig. 1).

In einem sich anschließenden zweiten Schritt S2 erfolgt ein Messen eines ersten elektrischen Widerstands R1 (vgl. Fig. 3) des Potentiometers zusammen mit der zugehörigen ersten Position P1 des Drückers 25 als erstes Wertepaar P1, R1 (vgl. Fig. 3). Das erste Wertepaar P1, R1 definiert dabei den Punkt, bei dem der mechanische Kontakt im Schalter bei der Bewegung des Drückers 25 von der Ruhelage RL in Richtung der Endlage EP (vgl. Fig. 1) geschlossen wird.

In einem sich anschließenden dritten Schritt S3 erfolgt ein weiteres Weg-Betätigen des Drückers 25 bis zu dessen mechanischer Endlage EP (vgl. Fig. 1).

In einem sich anschließenden Schritt S4 erfolgt ein Messen des zweiten elektrischen Widerstands des Potentiometers zusammen mit der zugehörigen zweiten Position des Drückers 25 als zweites Wertepaar P2, R2 (vgl. Fig. 3). Dies definiert das Erreichen der mechanischen Endlage EP des Drückers 25 (vgl. Fig. 1).

In einem sich anschließenden fünften Schritt S5 wird der Drücker 25graduell aus der Endlage EP in Richtung der Ruhelage RL bewegt (vgl. Fig. 1). Sobald der mechanische Kontakt im Schalter geöffnet wird, wird in einem sich anschließenden sechsten Schritt S6 ein dritter elektrischer Widerstand des Potentiometers zusammen mit der zugehörigen dritten Position des Drückers 25 als drittes Wertepaar P3, R3 (vgl. Fig. 3) gemessen.

In einem siebten Verfahrensschritt S7, der sich an den sechsten Verfahrensschritt S6 anschließt, erfolgt ein Abspeichern der Wertepaare P1, R1; P2, R2; P3, R3 (vgl. Fig. 3) in der Motorsteuereinheit 10 der Handwerkzeugmaschine 100 (vgl. Fig. 1).

### Bezugszeichenliste

- 10: Motorsteuereinheit
- 20: Potentiometer-Schalter-Einheit
- 25: Drücker
- 90: Elektromotor
- 100: elektrische Handwerkzeugmaschine
- 200: Kalibrierungsverfahren
- BW: tatsächlicher Betätigungsweg
- EL: Endlagenkennlinie
- EP: Endlage
- KL: Potentiometerkennlinie
- KU: Kennlinienüberhöhung
- P1: erste Position
- P2: zweite Position
- P3: dritte Position
- Q1: erster Quadrant
- R1: erster elektrischer Widerstand
- R2: zweiter elektrischer Widerstand
- R3: dritter elektrischer Widerstand
- S1..S7: Verfahrensschritte
- SL: Schalterkennlinie
- SP1: erster Schnittpunkt
- SP2: zweiter Schnittpunkt
- SP3: dritter Schnittpunkt

## Patentansprüche

1. Elektrische Handwerkzeugmaschine (100) mit einer Motorsteuereinheit (10) zum Ansteuern eines von der Handwerkzeugmaschine (100) umfassten Elektromotors (90) und mit einer Potentiometer-Schalter-Einheit (20), die mit der Motorsteuereinheit (10) zwecks Drehzahl-Sollwert-Vorgabe verbunden ist, wobei die Potentiometer-Schalter-Einheit (20) einen Drücker (25) aufweist, der derart eingerichtet ist, dass bei einer Wegbetätigung zunächst ein mechanischer Kontakt im Schalter geschlossen wird und danach, bei weiterer Wegbetätigung, ein mechanischer Schleifer auf einer Potentiometer-Schleifbahn wirksam wird,
**dadurch gekennzeichnet, dass** die Motorsteuereinheit (10) ausgebildet ist den Elektromotor (90) unter Verwendung einer kalibrierten, vorzugsweise linearisierten Potentiometerkennlinie (KL) anzusteuern, wobei die Potentiometerkennlinie (KL) derart kalibriert und vorzugsweise extrapoliert ist, dass ein Schnittpunkt (SP1) zwischen der Potentiometerkennlinie (KL) und einer Schalterkennline (SL) des Schalters im ersten Quadranten (Q1) eines Koordinatensystems liegt, das durch den elektrischen Widerstand des Potentiometers als Ordinate und den tatsächlichen Betätigungsweg (BW) des Drückers (25) als Abszisse aufgespannt ist.

2. Handwerkzeugmaschine (100) nach Anspruch 1,
**dadurch gekennzeichnet, dass** die Potentiometerkennlinie (KL) derart kalibriert und vorzugsweise extrapoliert ist, dass die Potentiometerkennlinie (KL) einer Endlagenkennline (EL) des Drückers (25) im ersten Quadranten (Q1) des Koordinatensystems in einem zweiten Schnittpunkt (SP2) schneidet.

3. Handwerkzeugmaschine (100) nach Anspruch 2,
**dadurch gekennzeichnet, dass** die berechnete Potentiometerkennlinie (KL) unterhalb einer tatsächlichen Kennlinienüberhöhung (KU) des Potentiometers im Bereich der Endlage (EP) des Drückers (25) verläuft.

4. Handwerkzeugmaschine (100) nach Anspruch 2 oder 3,
**dadurch gekennzeichnet, dass** die Schalterkennline (SL) und die Endlagenkennline (EL) parallel zur Ordinate verlaufen.

5. Handwerkzeugmaschine nach einem der Ansprüche 2 bis 4,
**dadurch gekennzeichnet, dass** die Potentiometerkennlinie (KL) über ihre Schnittpunkte (SP1, SP2) mit der Schalterkennline (SL) und der Endlagenkennlinie (EL) hinaus verlängert ist.

6. Handwerkzeugmaschine (100) nach einem der vorangehenden Ansprüche,
**dadurch gekennzeichnet, dass** die berechnete Potentiometerkennlinie (KL) linear ist und eine Steigung zwischen 630 und 740 Ohm pro Millimeter Betätigungsweg (BW) aufweist.

7. Handwerkzeugmaschine (100) nach Anspruch 1,
**dadurch gekennzeichnet**, die Potentiometerkennlinie (KL) auf Basis von zumindest zwei, vorzugsweise drei Wertepaaren kalibriert ist, wobei ein erstes Wertepaar (P1, R1) bestimmt ist durch Messen eines ersten elektrischen Widerstands (R1) des Potentiometers zusammen mit der zugehörigen ersten Position (P1) des Drückers (25), sobald der mechanische Kontakt im Schalter (25) geschlossen wird; ein zweites Wertepaar (P2, R2) bestimmt ist durch Messen eines zweiten elektrischen Widerstands (R2) des Potentiometers zusammen mit der zugehörigen zweiten Position (P2) des Drückers (25), sobald die mechanische Endlage (EP) des Drückers (P2) erreicht wird; und vorzugsweise ein drittes Wertepaar (P3, R3) bestimmt ist durch Messen eines dritten elektrischen Widerstands (R3) des Potentiometers zusammen mit der zugehörigen dritten Position (P3) des Drückers (25), sobald der mechanische Kontakt im Schalter geöffnet wird.

8. Verfahren (200) zum Kalibrieren einer Potentiometer-Schalter-Einheit (20) einer elektrischen Handwerkzeugmaschine (100), wobei die Handwerkzeugmaschine (100) eine Motorsteuereinheit (10) zum Ansteuern eines von der Handwerkzeugmaschine (100) umfassten Elektromotors (90) und eine Potentiometer-Schalter-Einheit (20) aufweist, die mit der Motorsteuereinheit (10) zwecks Drehzahl-Sollwert-Vorgabe verbunden ist, wobei die Potentiometer-Schalter-Einheit (20) einen Drücker (25) aufweist, der derart eingerichtet ist, dass bei einer Wegbetätigung über einen Betätigungsweg (BW) zunächst ein mechanischer Kontakt im Schalter geschlossen wird und danach, bei weiterer Wegbetätigung, ein mechanischer Schleifer auf einer Potentiometer-Schleifbahn wirksam wird, wobei das Verfahren (200) die Schritte aufweist:
- (S1) graduelles Weg-Betätigen des Drückers (25), vorzugsweise mittels eines Präzisionslinearmotors, ausgehend von einer Ruhelage (RL) des Drückers (25);
- (S2) Messen eines ersten elektrischen Widerstands (R1) des Potentiometers zusammen mit der zugehörigen ersten Position (P1) des Drückers (25) als erstes Wertepaar (P1, R1), sobald der mechanische Kontakt im Schalter geschlossen wird;
- (S3) weiteres Weg-Betätigen des Drückers (25) bis zu dessen mechanischer Endlage (EP); und
- (S4) Messen eines zweiten elektrischen Widerstands (R2) des Potentiometers zusammen mit der zugehörigen zweiten Position (P2) des Drückers (25) als zweites Wertepaar (P2, R2), sobald die mechanische Endlage (EP) des Drückers (25) erreicht wird.

9. Verfahren (200) nach Anspruch 8, **gekennzeichnet durch** die Schritte:
- (S5) graduelles Zurückführen des Drückers (25), vorzugsweise mittels des Präzisionslinearmotors, in Richtung der Ruhelage (RL) des Drückers (25);
- (S6) Messen eines dritten elektrischen Widerstands (R3) des Potentiometers zusammen mit der zugehörigen dritten Position (P3) des Drückers (25) als drittes Wertepaar (P3, R3), sobald der mechanische Kontakt im Schalter geöffnet wird.

10. Verfahren (200) nach Anspruch 8 oder 9, **gekennzeichnet durch** den Schritt:
- (S7) Abspeichern der Wertepaare (P1, R1; P2, R2; P3, R3) und/oder einer mittels der Wertepaare (P1, R1; P2, R2; P3, R3) kalibrierten, vorzugsweise linearisierten Potentiometerkennlinie (KL) in der Motorsteuereinheit (10).
